(19) Europäisches Patentamt
European Patent Office
Office européen des brevets

(11) **EP 3 040 514 A1**

(12) **EUROPEAN PATENT APPLICATION**

(43) Date of publication:
06.07.2016 Bulletin 2016/27

(51) Int Cl.:
*F01D 5/18* (2006.01)        *F23R 3/00* (2006.01)
*F01D 5/28* (2006.01)

(21) Application number: 15199789.7

(22) Date of filing: 14.12.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority:  30.12.2014  US 201462097621 P
10.11.2015  US 201514936754

(71) Applicant: **General Electric Company**
**Schenectady, NY 12345 (US)**

(72) Inventor: **BUNKER, Ronald Scott**
**West Chester, OH Ohio 45069 (US)**

(74) Representative: **Williams, Andrew Richard**
**GE International Inc.**
**GPO-Europe**
**The Ark**
**201 Talgarth Road**
**Hammersmith**
**London W6 8BJ (GB)**

(54) **GAS TURBINE ENGINE COMPONENT, CORRESPONDING MANUFACTURING AND REPAIRING METHODS**

(57)    An engine component (80) for a gas turbine engine includes a film-cooled substrate (82) having a hot surface (84) facing hot combustion gas and a cooling surface (86) facing a cooling fluid flow. The substrate includes one or more film holes (90) that have a multi-faceted diffusing section configured to improve the adhesion of a coating on the substrate.

FIG. 3

## Description

BACKGROUND OF THE INVENTION

Turbine engines, and particularly gas or combustion turbine engines, are rotary engines that extract energy from a flow of combusted gases passing through the engine onto a multitude of turbine blades. Gas turbine engines have been used for land and nautical locomotion and power generation, but are most commonly used for aeronautical applications such as for aircraft, including helicopters. In aircraft, gas turbine engines are used for propulsion of the aircraft. In terrestrial applications, turbine engines are often used for power generation.

Gas turbine engines for aircraft are designed to operate at high temperatures to maximize engine efficiency, so cooling of certain engine components, such as the high pressure turbine and the low pressure turbine, may be necessary. Some engine components include film holes that supply a thin layer or film of cooling fluid on a hot surface of the engine component to protect the engine component from hot combustion gas. Typically, film holes are machined into a substrate for the engine component. One or more coatings for thermal and/or oxidation protection can be applied to the substrate before or after machining the film hole. However, machining after the coating application risks damaging the coating.

BRIEF DESCRIPTION OF THE INVENTION

Embodiments of the invention relate broadly to film-cooled engine components, particularly in a gas turbine engine, as well as to methods for manufacturing or repairing film-cooled engine components.

In one aspect, the invention relates to an engine component for a gas turbine engine, the gas turbine engine generating hot combustion gas flow, including a substrate having a hot surface facing the hot combustion gas and a cooling surface facing the cooling fluid flow, a film hole including an inlet provided on the cooling surface, an outlet provided on the hot surface, and a passage connecting the inlet and the outlet and comprising a multifaceted diffusing section having multiple facets, and a coating adhered to the multifaceted diffusing section, wherein the multiple facets are configured to improve the adhesion of the coating to the substrate.

In another aspect, the invention relates to a method of producing an engine component for a gas turbine engine, including machining a passage for a film hole through a substrate having a first surface and a second surface, the passage having an inlet provided on the first surface and an outlet provided on the second surface, machining multiple facets in the passage to define a multifaceted diffusing section of the film hole having an increased adhesion surface area on the second surface as compared to the second surface prior to machining the multiple facets, and after multiple facets are machined, adhering a coating to the multifaceted diffusing section of the film hole.

In yet another aspect, the invention relates to a method of repairing an engine component comprising a coated substrate with a film hole in the substrate having a diffusing section, the method including stripping the old coating from the diffusing section, cleaning the stripped diffusing section, and adhering a new coating to the diffusing section, which is configured to improve the adhesion of the new coating to the substrate.

BRIEF DESCRIPTION OF THE DRAWINGS

In the drawings:

FIG. 1 is a schematic cross-sectional diagram of a gas turbine engine for an aircraft.

FIG. 2 is a side section view of a combustor and high pressure turbine of the engine from FIG. 1.

FIG. 3 is a schematic view showing a portion of an engine component of the engine from FIG. 1 having a film hole according to a first embodiment of the invention.

FIG. 4 is a sectional view through the film hole from FIG. 3.

FIG. 5 is a plan view of an outlet for the film hole from FIG. 3.

FIG. 6 is a close-up, sectional view through a portion of the film hole 90 from FIG. 5.

FIG. 7 is a close-up, sectional view of a portion of a film hole according to a second embodiment of the invention.

FIG. 8 is a close-up, sectional view of a portion of a film hole according to a third embodiment of the invention.

FIG. 9 is a flow chart showing a method of manufacturing an engine component with a film hole according to a fourth embodiment of the invention.

FIG. 10 is a flow chart showing a method of repairing an engine component with a film hole according to a fifth embodiment of the invention.

DESCRIPTION OF EMBODIMENTS OF THE INVENTION

The described embodiments of the present invention are directed to a film-cooled engine component, particularly in a gas turbine engine, as well as a method for manufacturing or repairing a film-cooled engine component. For purposes of illustration, aspects of the present invention will be described with respect to an aircraft gas turbine engine. It will be understood, however, that the invention is not so limited and may have general applicability in non-aircraft applications, such as other mobile applications and non-mobile industrial, commercial, and residential applications.

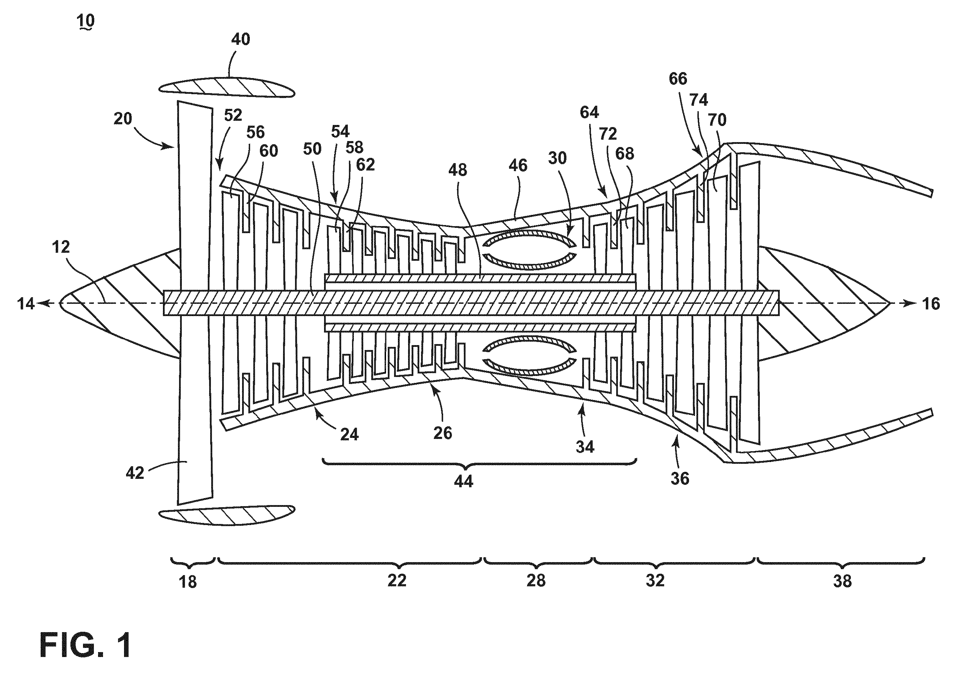

FIG. 1 is a schematic cross-sectional diagram of a gas turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of fan blades 42 disposed radially about the centerline 12.

The HP compressor 26, the combustor 30, and the HP turbine 34 form a core 44 of the engine 10 which generates combustion gases. The core 44 is surrounded by a core casing 46 which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 may be provided in a ring and may extend radially outwardly relative to the centerline 12, from a blade platform to a blade tip, while the corresponding static compressor vanes 60, 62 are positioned downstream of and adjacent to the rotating blades 56, 58. It is noted that the number of blades, vanes, and compressor stages shown in FIG. 1 were selected for illustrative purposes only, and that other numbers are possible.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 may be provided in a ring and may extend radially outwardly relative to the centerline 12, from a blade platform to a blade tip, while the corresponding static turbine vanes 72, 74 are positioned upstream of and adjacent to the rotating blades 68, 70. It is noted that the number of blades, vanes, and turbine stages shown in FIG. 1 were selected for illustrative purposes only, and that other numbers are possible.

In operation, the rotating fan 20 supplies ambient air to the LP compressor 24, which then supplies pressurized ambient air to the HP compressor 26, which further pressurizes the ambient air. The pressurized air from the HP compressor 26 is mixed with fuel in combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

Some of the ambient air supplied by the fan 20 may bypass the engine core 44 and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid may be, but is not limited to, fluid discharged from the LP compressor 24 or the HP compressor 26.

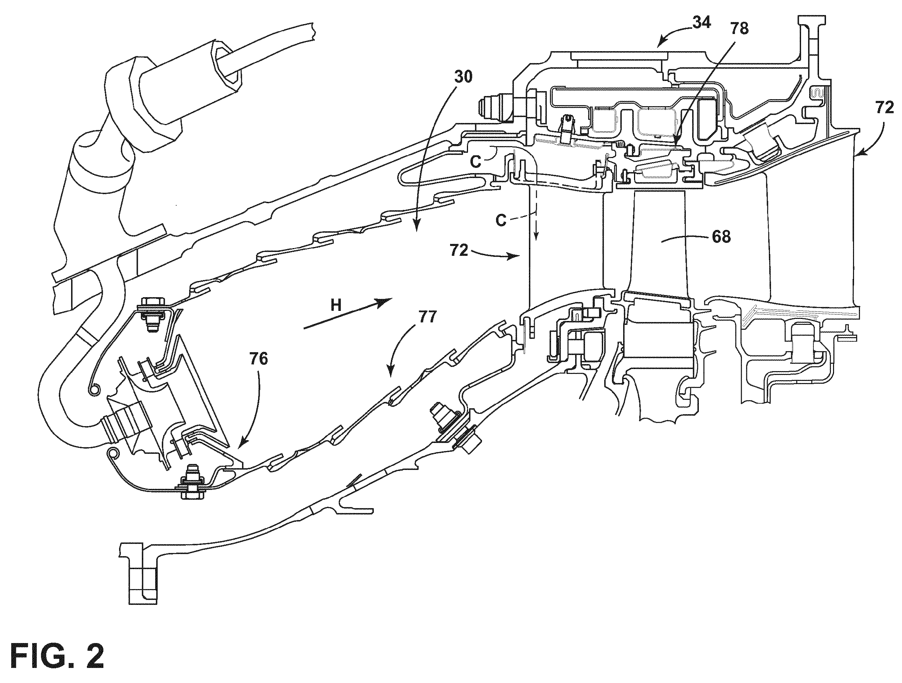

FIG. 2 is a side section view of the combustor 30 and HP turbine 34 of the engine 10 from FIG. 1. The combustor 30 includes a deflector 76 and a combustor liner 77. Adjacent to the turbine blade 68 of the turbine 34 in the axial direction are sets of radially-spaced, static turbine vanes 72, with adjacent vanes 72 forming nozzles therebetween. The nozzles turn combustion gas to better flow into the rotating blades so that the maximum energy may be extracted by the turbine 34. A cooling fluid flow C passes through the vanes 72 to cool the vanes 72 as hot combustion gas H passes along the exterior of the vanes 72. A shroud assembly 78 is adjacent to the rotating blade 68 to minimize flow loss in the turbine 34. Similar shroud assemblies can also be associated with the LP turbine 36, the LP compressor 24, or the HP compressor 26.

One or more of the engine components of the engine 10 includes a film-cooled substrate in which various film hole embodiments disclosed further herein may be utilized. Some non-limiting examples of the engine component having a film-cooled substrate can include the blades 68, 70, vanes or nozzles 72, 74, combustor deflector 76, combustor liner 77, or shroud assembly 78, described in FIGS. 1-2. Other non-limiting examples where film cooling is used include turbine transition ducts and exhaust nozzles.

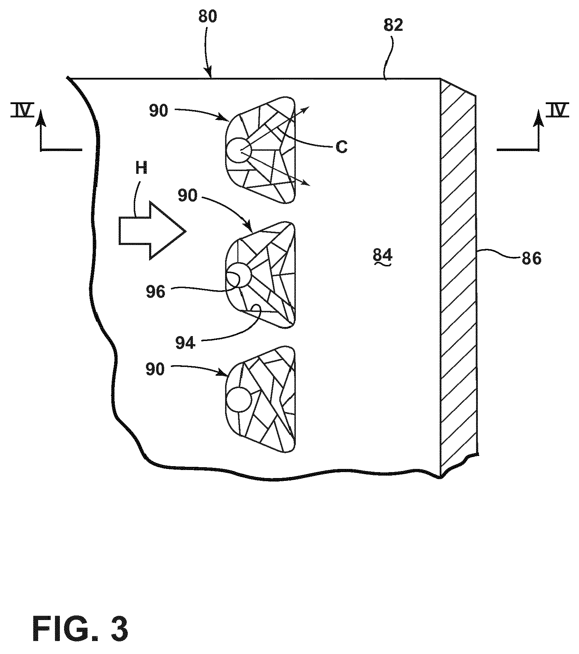

FIG. 3 is a schematic view showing a portion of an engine component 80 of the engine 10 from FIG. 1 according to a first embodiment of the invention. The engine component 80 can be disposed in a flow of hot gases represented by arrows H. A cooling fluid flow, represented by arrows C may be supplied to cool the engine component. As discussed above with respect to FIGS. 1-2, in the context of a turbine engine, the cooling air can be ambient air supplied by the fan 20 which bypasses the engine core 44, fluid discharged from the LP compressor 24, or fluid discharged from the HP compressor 26.

The engine component 80 includes a substrate 82 having a hot surface 84 facing the hot combustion gas and a cooling surface 86 facing the cooling fluid C. The substrate 82 may form a wall of the engine component 80. The first engine component 80 can define at least one interior cavity comprising the cooling surface 86. The hot surface 84 may be an exterior surface of the engine component 80. In the case of a gas turbine engine, the hot surface 84 may be exposed to gases having temperatures in the range of 1000 °C to 2000 °C. Suitable materials for the substrate 82 include, but are not limited to, steel, refractory metals such as titanium, or superalloys based on nickel, cobalt, or iron. The superalloys can include those in equi-axed, directionally solidified, and single crystal structures.

The engine component 80 further includes multiple film holes 90 that provide fluid communication between the interior cavity and the hot surface 84 of the engine component 80. During operation, cooling air C is supplied to the interior cavity and out of the film holes 90 to create a thin layer or film of cool air on the hot surface 84, protecting it from the hot combustion gas H.

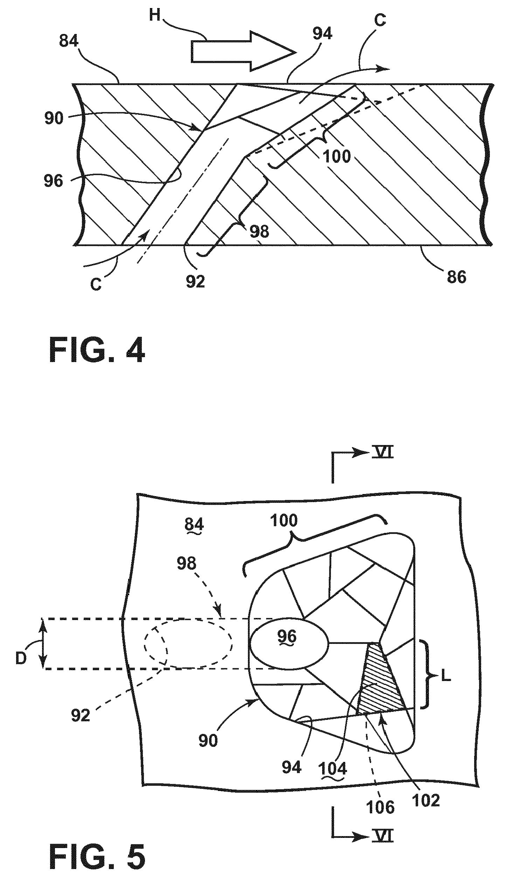

FIG. 4 is a sectional view through one of the film holes 90 from FIG. 3. Each film hole 90 can have an inlet 92 provided on the cooling surface 86 of the substrate 82, an outlet 94 provided on the hot surface 84, and a passage 96 connecting the inlet 92 and the outlet 94. The passage 96 can define a metering section 98 for metering of the mass flow rate of the cooling fluid C and a diffusing section 100 in which the cooling fluid C may expand to form a wider cooling film. The metering section 98 can be a portion of the passage 96 with the smallest cross-sectional area, and may be a discrete location or an elongated section of the passage 96. The cross-sectional area of the metering section 98 defines a metering diameter (D) of the passage 96. The metering section 98 can be provided at or near the inlet 92, while the diffusion section 100 can be defined at or near the outlet 94. Cooling fluid C enters the film hole 90 through the inlet 92 and passes through the metering section 98 and diffusing section 100 before exiting the film hole 90 at the outlet 94 along the hot surface 84.

FIG. 5 is a close-up view of the outlet 94 of the film hole 90. Embodiments of the present invention provides for a shaping or contouring of the film hole 90 by providing the passage 96 with a multifaceted diffusing section 100. The multifaceted diffusing section 100 includes a plurality of facets 102 that improve adhesion of a coating to the diffusing section 100 of the film hole 90.

In one example, the facets 102 define a surface topology on the hot surface 84 that has an increased adhesion surface area as compared to the hot surface 84 without the facets 102. More specifically, the surface topology has an increased adhesion surface area as compared to the film hole 90 or diffusing section 100 without the facets 102. The increased adhesion surface area makes the coating more durable while also allowing the diffusing section 100 to be shaped for improved cooling performance. It is noted that facets configured to improve adhesion of a coating can be used with any generally diffuser shaped film hole.

Each facet 102 may be defined by a discrete surface 104 bounded by a peripheral edge 106. For illustration purposes, one exemplary facet 102 is shown in FIG. 5 with a dotted line defining its peripheral edge 106. The discrete surfaces 104 may be planar, curved, or a combination of planar and curved. The planform of each facet 102 can take on various geometric shapes, including rounded or polygonal, or combinations thereof. A rounded facet 102 can have one or more curved segments making up the peripheral edge 106, while a polygonal facet 102 can have multiple linear segments making up the peripheral edge 106.

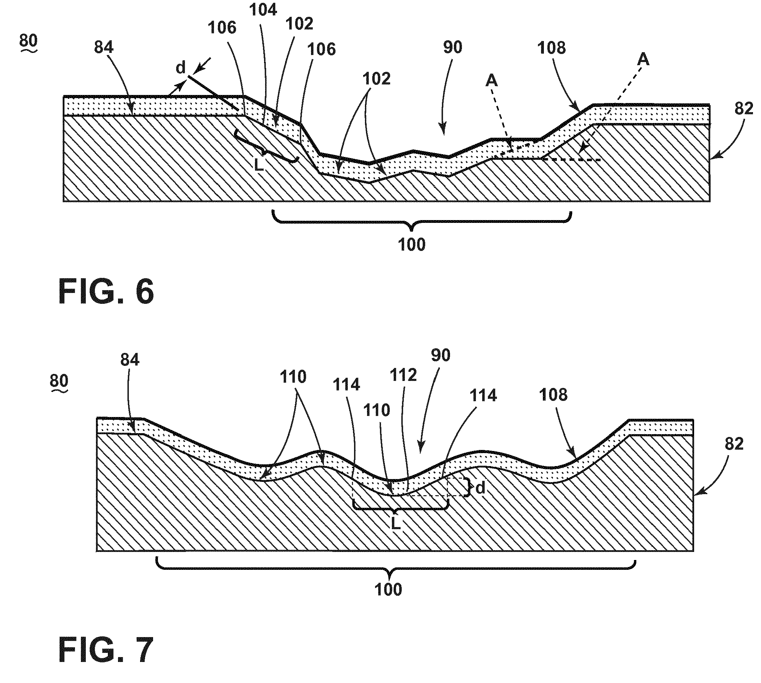

FIG. 6 is a close-up, sectional view through a portion of the multifaceted diffusing section 100 of the film hole 90 from FIG. 5. A coating 108 is adhered to at least the multifaceted diffusing section 100 of the substrate 82. It is noted that the relative dimensions of the multifaceted diffusing section 100 and the coating 108 may be exaggerated in FIG. 6 for illustration purposes.

The coating 108 may include a single-layer coating or a multi-layer coating. For a multi-layer coating, one of the layers may be a bond coat. The coating 108 may be additive or may diffuse chemically into the substrate material. Some non-limiting examples of coatings for the multifaceted diffusing section 100 include a thermal barrier coating, an oxidation protection coating, or combinations thereof. One example of an oxidation protection coating is a bond coat. Most insulating coatings, such as thermal barrier coatings, have a thermal conductivity around 0.5 to 1 Btu/hr/ft/F. Metallic coatings can have a thermal conductivity of nearly that of the substrate metal, such as between 5 and 15 Btu/hr/ft/F.

One example of a thermal barrier coating includes yttria-stabilized zirconia oxide (YSZ). Some specific examples of oxidation protection coating or bond coats, depending on how it is applied, for the multifaceted diffusing section 100 include nickel aluminide alloys, platinum aluminide alloys, and MCrAlY alloys, where "M" is nickel, cobalt, or a combination of both.

In one non-limiting example, the coating can be a NiCrAlY alloy and the substrate can be a nickel-based superalloy.

The coating 108 can be applied in a substantially constant thickness over the multifaceted diffusing section 100. In other examples, the thickness of the coating 108 can vary over the multifaceted diffusing section 100.

The coating 108 can substantially follow the surface topology defined by the facets 102 of the multifaceted diffusing section 100. By "substantially" follow, the coating can define a coating topology that deviates from the surface topology defined by the facets 102, such as by rounding out the transitions between facets 102, but that does not obscure the overall configuration of the diffuser shaping. The coating 108 can further have a substantially constant thickness over the surface topology, or vary over the surface topology.

The orientation of the facets 102 can impact the coating adhesion. As illustrated in FIG. 5, the facets 102 may be randomly oriented so that there is no axis of symmetry for the diffusing section 100. Even for diffusing sections 100 that lack an axis of symmetry, the diffusing section 100 will as a whole still maintain its overall shape prior to faceting, including if the overall diffuser shape was symmetrical or otherwise. The random facets 102 may increase coating adhesion by increasing the available coating surface area of the substrate surface. Such faceting can improve durability of the coating by providing discontinuities to arrest possible flaw propagations or coating delaminations. In other embodiments, the facets 102 may be organized with respect to a predetermined pattern or arrangement.

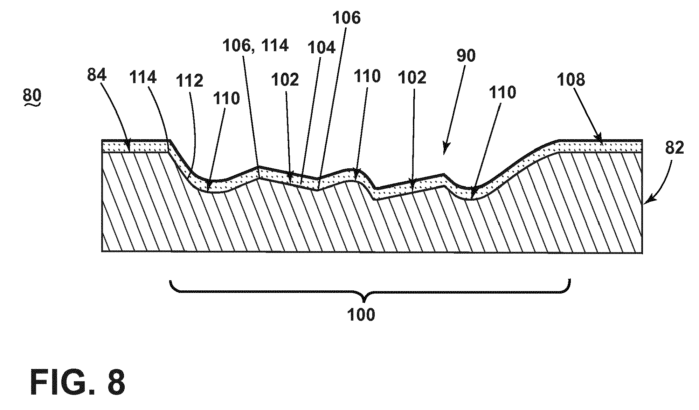

The shape of the facets 102 can also impact coating adhesion. As noted above, the facets 102 include one discrete surface that may be planar, curved, or a combination of planar and curved. In FIG. 6, the multifaceted diffusing section 100 includes planar facets 102. FIG. 7 is a close-up, sectional view of a film hole 90 with a multifaceted diffusing section 100 having a plurality of arcuate facets 110 according to a third embodiment of the invention. FIG. 8 is a close-up, sectional view of a film hole 90 with a multifaceted diffusing section 100 having a combination of planar facets 102 and arcuate facets 110 according to a fourth embodiment of the invention.

Like the embodiment of FIG. 6, the embodiments of FIGS. 7 and 8 can have randomly oriented facets 102, 110. The planform of each facet 102, 110 can take on various geometric shapes, including rounded or polygonal, or combinations thereof. For the planar facets 102, the discrete surface 104 can be substantially flat. For the arcuate facets 110, which may be defined by a discrete surface 112 bounded by a peripheral edge 114, the discrete surface may be curved, such as being convex or concave. For either facet 102, 110, the peripheral edge 106, 114 may be sharply defined, such as by a sharp edge, or may be defined by a more gradual transition at the edge, such as being defined by an inflection point. Furthermore, adjacent facets 102, 110 can share a common portion of their peripheral edge 106, 114.

The dimensions of the facets 102, 110 can also impact coating adhesion. The facets 102, 110 can have a facet length (L), which is the maximum linear distance between two points on the peripheral edge 106, 114 of the facet 102, 110, regardless of the orientation relative to the rest of the facet surface 104, 112. The facet 102, 110 can further have a facet depth (d) which is the maximum linear distance between the peripheral edge 106, 114 and the lowest point on the facet surface 104, 112. For the planar facets 102, the facet depth (d) is zero. For the arcuate facets 110, including facets 110 that are convexly or concavely curved with respect to the hot surface 84, the facet depth (d) can be greater than zero.

It has been found that the facets 102, 110 that are too large effectively create a non-faceted diffusing section and do not increase the adhesion area for the coating. However, facets 102, 110 that are too small can create undesirable voids in the coating since the coating can bridge over the facets in a natural process called shadowing. At these voids, the coating is not bonded or adhered to the substrate. In one example, a facet 102, 110 with improved coating adhesion can have:

$$d \leq D$$

where (D) is the effective diameter of the metering section 98 of the film hole 90 (see FIG. 5).

Further, for an arcuate facet 110:

$$\frac{1}{2}D \leq L$$

Still further, for a planar facet 102:

$$\frac{1}{4}D \leq L$$

More specifically, for a planar facet 102:

$$\frac{1}{4}D \leq L \leq 2D$$

For the embodiment shown in FIGS. 5-7, it is noted that the dimensions of the facets 102, 110 can vary over the diffusing section, such that one facet 102, 110 may have a larger or smaller facet length (L) than another facet 102, 110, and/or may have a larger or smaller facet depth (d) than another facet 102, 110.

Further, it has been found that the angle between planar facets 102 also has an effect on the bridging phenomenon. A large relative angle between planar facets 102 effectively creates a narrow space over which the coating can bridge. In one example, the relative angle between planar facets 102 can be 40 degrees or less; more specifically, the relative angle can be 20 degrees or less.

It is noted that, in practice, the substrate 82 has a processing level of roughness, i.e. it will not have a perfectly smooth finish. The roughness of the substrate 82 is inherent from processing, and is not included as part of the faceting described herein. The inherent roughness of the substrate 82 is of a magnitude much smaller than the above dimensions.

In any of the above embodiments, the present invention may be combined with shaping or contouring of the inlet 92 or passage 96 of the film hole 90. The present invention may also apply to slot-type film cooling, in which case the outlet 94 is provided within a slot on the hot surface 84.

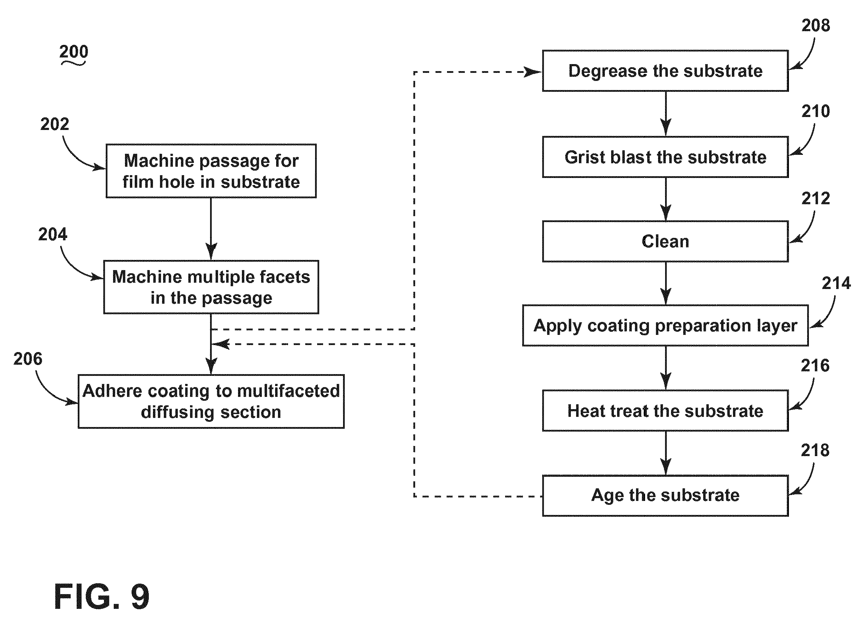

FIG. 9 is a flow chart showing a method 200 of manufacturing an engine component with a film hole according to a fourth embodiment of the invention. The method 200 can specifically be used to manufacture an engine component for a gas turbine engine, which may include any of the film holes discussed in the above embodiments. Some non-limiting examples of engine components for a gas turbine engine that can be manufactured using the method include a blade, vane, nozzle, combustor deflector, combustor liner, shroud, turbine transition duct, or exhaust nozzle.

The method 200 can begin with a substrate, which may include any of the substrate materials discussed above, including steel, refractory metals such as titanium, or superalloys based on nickel, cobalt, or iron. The substrate can include a first surface and a second surface, which may correspond, respectively to a cooling surface and a hot surface to the substrate.

At step 202, a passage for a film hole is machined through the substrate. The machining of the passage can include providing an inlet for the passage on the first surface of the substrate and providing an outlet for the passage on the second surface of the substrate. Some examples of suitable machining techniques for machining the passage at step 202 include, but are not limited to, electric discharge machining, laser drilling, abrasive liquid jet drilling, and water guided laser jet drilling.

At step 204, multiple facets are machined in the passage to define a multifaceted diffusing section of the film hole. The machined facets increase the surface adhesion area on the second surface of the substrate, as compared to the second surface prior to machining the facets. Some examples of suitable machining techniques for machining the facets at step 204 include, but are not limited to, electric discharge machining, laser drilling, abrasive liquid jet drilling, and water guided laser jet drilling. It is noted that the machining techniques for the facets may require a greater degree of control, accuracy, and/or precision than for the film hole passage, and so specific version of the exemplary machining techniques, such as low powered milling lasers or spinning electrode milling electric discharge machining, may be used for the facets.

Depending on the machining technique and the design of the film hole and facets, steps 202 and 204 may be performed in a one-step machining process, a two-step machining process using the same machining technique, or a two-step machining process using different machining techniques for the passage and the facets. For example, electric discharge machining can be used to form the passage and facets in a one-step process, while laser drilling can be used to form the passage and facets in a two-step process.

At step 206, after the facets are machined in the passage, a coating is adhered to the multifaceted diffusing section of the film hole. The coating may include any of the coatings discussed above, including a single-layer and multi-layer coatings, and bond coat, oxidation protection, thermal barrier coatings, or combinations thereof.

Some examples of suitable coating techniques for coating the multifaceted diffusing section of the film hole at step 206 include, but are not limited to, thermal spraying, physical vapor deposition, chemical vapor deposition, slurry coating, sputtering, electron beam physical vapor deposition, electroless plating, and electroplating. Thermal spraying may include plasma spraying, such as air plasma spraying or vacuum plasma spraying, high velocity oxy-fuel spraying (HVOF), or high velocity air-fuel spraying (HVOF), or cold spraying.

The method can optionally include step 208 of degreasing the substrate prior to adhering the coating and after machining the passage and facets. The degreasing step 208 may depend on the machining techniques used in steps 202 and 204; for example electric discharge machining requires the use of an electrolyte solution that must be removed prior to coating. In one non-limiting example, degreasing can include cleaning the substrate with alcohol in an ultrasonic tank.

The method can further optionally include step 210 of grit blasting the substrate prior to adhering the coating and after machining the passage and facets. Grit blasting can include directing an accelerated flow of abrasive particles at the substrate, particularly at the surface including the facets, in order to remove contaminants from the substrate surface.

The method can further optionally include step 212 of cleaning the substrate prior to adhering the coating and after machining the passage and facets. Cleaning is preferably done after the optional grit blasting step. In one non-limiting example, cleaning the substrate can include washing the substrate with acetone. In another non-limiting example, cleaning can include cleaning the substrate with alcohol in an ultrasonic tank.

The method can further optionally include step 214 of applying a coating preparation layer or bond coat to the multifaceted diffusing section of the film hole prior to adhering the coating. The bond coat can be used between the substrate and the coating applied in step 208 to aid in adhesion. It is noted that the facets machined in step 204 can improve the adhesion of the bond coat in addition to the coating applied in step 206.

In one preferred method, the bond coat is plated on the substrate in step 214. In one example, the plated bond coat can be platinum. Plating may more typically be used when a ceramic or low conductivity coating is applied in step 206 by a molecular deposition process such as physical vapor deposition.

Other examples of suitable coating techniques for applying the bond coat at step 214 include, but are not limited to, thermal spraying, physical vapor deposition, chemical vapor deposition, slurry coating sputtering, electron beam physical vapor deposition, electroless plating, and electroplating. Thermal spraying may include plasma spraying, such as air plasma spraying or vacuum plasma spraying, high velocity oxy-fuel spraying (HVOF), or high velocity air-fuel spraying (HVOF), or cold spraying.

The method can further optionally include step 216 of heat treating the substrate prior to adhering the coating and after machining the passage and facets. Heat treating the substrate can include heating the substrate for a period of time, and is preferably done after applying the coating preparation layer at step 214. In one non-limiting example, the substrate can be heat treated at 2050 °F for two hours in a vacuum.

The method can further optionally include step 218 of aging the substrate before or after adhering the coating. Aging the substrate can is preferably done with the heat treating at step 216.

It is noted that the grit-blasting and cleaning steps 210, 212 can be performed several times during the method. For example, grit blasting and cleaning can be performed after degreasing at step 208, after applying the coating preparation layer at step 214, and after heat treating and aging at steps 216, 218.

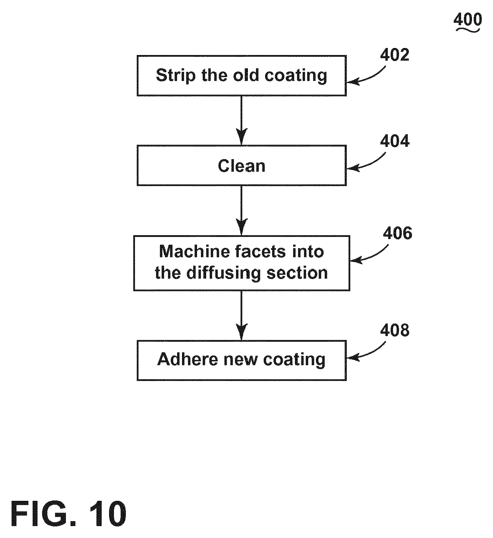

FIG. 10 is a flow chart showing a method 400 of repairing an engine component with a film hole according to a fifth embodiment of the invention. The method 400 can specifically be used to repair an engine component for a gas turbine engine that already includes a film hole, but the film hole lacks a multi-faceted diffusing section or has a multi-faceted diffusing section that is not configured to improve coating adhesion. More specifically, the method 400 can be used to repair an engine component having a coated substrate, in which the coating is damaged, worn, cracked, or otherwise in need of repair. Some non-limiting examples of engine components for a gas turbine engine that can be repaired using the method include a blade, vane, nozzle, combustor deflector, combustor liner, shroud, turbine transition duct, or exhaust nozzle.

The method 400 can begin at step 402 in which the old coating is stripped from the diffusing section of the film hole. Stripping the old coating can include stripping the entire coating, or stripping a selected portion or layer of the old coating. For example, one or more upper layers of the coating may be stripped, while a lower layer such as the bond coat may be left on the substrate. Stripping the old coating can entail grit blasting the substrate by directing an accelerated flow of abrasive particles at the substrate in order to remove contaminants from the substrate surface. The stripping can be limited to the diffusing section, or may include stripping a larger portion of the substrate.

Next, the stripped diffusing section can be cleaned in step 404. The cleaning can be limited to the diffusing section, or may include cleaning a larger portion of the substrate. In one non-limiting example, cleaning the stripped diffusing section can include an acetone wash. In another non-limiting example, cleaning can include cleaning the substrate with alcohol in an ultrasonic tank.

After cleaning at step 404, multiple facets can be machined into the diffusing section at step 406. The machined facets are configured to improve the surface adhesion of the new coating to the substrate, and can for example include any of the multi-faceted diffusing sections discussed in the above embodiments. In one example, the machined facets can increase the surface adhesion area on the second surface of the substrate, as compared to the second surface prior to machining the facets. Some examples of suitable machining techniques for machining the facets at step 406 include, but are not limited to, electric discharge machining, laser drilling, abrasive liquid jet drilling, and water guided laser jet drilling. More specifically, low powered milling lasers or spinning electrode milling electric discharge machining may be used for machining the facets.

After machining at step 406, a new coating can be adhered to the diffusing section at step 408. The new coating may include any of the coatings discussed above, including a single-layer and multi-layer coatings, and bond coat, oxidation protection, thermal barrier coatings, or combinations thereof.. Some examples of suitable coating techniques for coating the multifaceted diffusing section of the film hole at step 408 include, but are not limited to, thermal spraying, physical vapor deposition, chemical vapor deposition, slurry coating, sputtering, electron beam physical vapor deposition, electroless plating, and electroplating. Thermal spraying may include plasma spraying, such as air plasma spraying or vacuum plasma spraying, high velocity oxy-fuel spraying (HVOF), or high velocity air-fuel spraying (HVOF), or cold spraying. The coating can be limited to the facets of the diffusing section, or can be applied to a larger portion of the substrate.

The various embodiments of devices and methods related to the invention disclosed herein provide improved cooling for engine structures, particularly in a turbine component having film holes. One advantage that may be realized in the practice of some embodiments of the described systems is that the adhesion of a coating on the film hole is improved by a multifaceted diffusing section of the film hole. The substrate faceting underlying the coating increases the adhesion bonding area for the coating, thereby improving the durability of the coating.

Another advantage that may be realized in the practice of some embodiments of the described devices and methods is that the substrate can be faceted prior to the application of the coating, which minimizes the risk of damaging the coating.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:

1. An engine component for a gas turbine engine, the gas turbine engine generating hot combustion gas flow, comprising:

a substrate having a hot surface facing the hot combustion gas and a cooling surface facing the cooling fluid flow;

a film hole comprising:

an inlet provided on the cooling surface;

an outlet provided on the hot surface; and

a passage connecting the inlet and the outlet and comprising a multifaceted diffusing section having multiple facets; and

a coating adhered to the multifaceted diffusing section;

wherein the multiple facets are configured to improve the adhesion of the coating to the substrate.

2. The engine component of clause 1, wherein the coating comprises at least one of a bond coat, an oxidation protection coating, or a thermal barrier coating.

3. The engine component of any preceding clause, wherein the coating comprises one of yttria-stabilized zirconia oxide, a nickel aluminide alloy, a platinum aluminide alloy, a NiCrAlY alloy, a CoCrAlY alloy, a NiCoCrAlY alloy, or a CoNiCrAlY alloy.

4. The engine component of any preceding clause, wherein the substrate comprises one of steel, titanium, a nickel-based superalloy, a cobalt-based superalloy, or an iron-based superalloy.

5. The engine component of any preceding clause, wherein the coating comprises NiCrAlY alloy and the substrate comprises a nickel-based superalloy.

6. The engine component of any preceding clause, wherein the multiple facets comprise multiple planar facets, wherein the relative angle defined by at least two of the multiple planar facets is 40 degrees or less.

7. The engine component of any preceding clause, wherein the passage further defines a metering section upstream of the multifaceted diffusing section and defining a metering diameter of the passage.

8. The engine component of any preceding clause, wherein at least some of the multiple facets have a facet length that is greater than or equal to ¼ the metering diameter and less than twice the metering diameter.

9. The engine component of any preceding clause, wherein each of the multiple facets have a facet length that is greater than or equal to ½ the metering diameter.

10. The engine component of any preceding clause, wherein each of the multiple facets have a facet depth that is less than or equal to the metering diameter.

11. The engine component of any preceding clause, wherein the multiple facets comprise multiple planar facets, multiple arcuate facets, or a combination of planar and arcuate facets.

12. The engine component of any preceding clause, wherein the coating includes a substantially constant thickness over the multifaceted diffusing section.

13. The engine component of any preceding clause, wherein the multiple facets are randomly oriented with respect to each other.

14. The engine component of any preceding clause, wherein the multiple facets define a surface topology of the multifaceted diffusing section, and the coating substantially follows the surface topology.

15. The engine component of any preceding clause, wherein the coating includes a substantially constant thickness over the surface topology.

16. A method of producing an engine component for a gas turbine engine, comprising:

machining a passage for a film hole through a substrate having a first surface and a second surface, the passage having an inlet provided on the first surface and an outlet provided on the second surface;

machining multiple facets in the passage to define a multifaceted diffusing section of the film hole having an increased adhesion surface area on the second surface as compared to the second surface prior to machining the multiple facets; and

after multiple facets are machined, adhering a coating to the multifaceted diffusing section of the film hole.

17. The method of any preceding clause, wherein machining the passage comprises electric discharge machining, laser drilling, abrasive liquid jet drilling, or water guided laser jet drilling.

18. The method of any preceding clause, wherein machining the multiple facets comprises electric discharge machining, laser drilling, abrasive liquid jet drilling, or water guided laser jet drilling.

19. The method of any preceding clause, wherein machining the passage and machining the multiple facets comprises a two-step process using one machining technique.

20. The method of any preceding clause, wherein adhering the coating comprises thermal spraying, physical vapor deposition, chemical vapor deposition, slurry coating, sputtering, electron beam physical vapor deposition, electroless plating, or electroplating.

21. The method of any preceding clause and further comprising grit blasting the substrate at least once prior to adhering the coating.

22. The method of any preceding clause and further comprising cleaning the substrate at least once prior to adhering the coating.

23. The method of any preceding clause and further comprising applying a coating preparation layer to the multifaceted diffusing section of the film hole prior to adhering the coating.

24. The method of any preceding clause, wherein applying the coating preparation layer comprises plating the substrate with the coating preparation layer.

25. The method of any preceding clause, wherein applying the coating preparation layer further comprises exposing the plated coating preparation layer to a precursor using chemical vapor deposition.

26. The method of any preceding clause and further comprising heat treating the substrate prior to adhering the coating.

27. The method of any preceding clause and further comprising aging the substrate prior to adhering the coating.

28. A method of repairing an engine component comprising a coated substrate with a film hole in the substrate having a diffusing section, the method comprising:

stripping the old coating from the diffusing section;

cleaning the stripped diffusing section;

adhering a new coating to the diffusing section; and

after cleaning and prior to adhering the new coating, machining multiple facets into the diffusing section;

wherein the facets are configured to improve the adhesion of the new coating to the substrate.

29. The method of any preceding clause, wherein machining multiple facets comprises electric discharge machining, laser drilling abrasive liquid jet drilling, or water guided laser jet drilling.

30. The method of any preceding clause, wherein stripping the old coating comprises grit blasting the substrate.

31. The method of any preceding clause, wherein adhering the new coating comprises thermal spraying, physical vapor deposition, chemical vapor deposition, slurry coating, sputtering, electron beam physical vapor deposition, electroless plating, or electroplating.

32. The method of any preceding clause, wherein cleaning the stripped diffusing section comprises washing the substrate with alcohol in an ultrasonic tank.

**Claims**

1. An engine component (80) for a gas turbine engine, the gas turbine engine generating hot combustion gas flow (H), comprising:

a substrate (182) having a hot surface (84) facing the hot combustion gas and a cooling surface

(86) facing the cooling fluid flow (C);
a film hole (90) comprising:

> an inlet (92) provided on the cooling surface (86);
> an outlet (94) provided on the hot surface (84); and
> a passage (96) connecting the inlet and the outlet and comprising a multifaceted diffusing section (100) having multiple facets (102); and

> a coating (108) adhered to the multifaceted diffusing section;
> wherein the multiple facets are configured to improve the adhesion of the coating to the substrate.

2. The engine component of claim 1, wherein the coating comprises at least one of a bond coat, an oxidation protection coating, or a thermal barrier coating.

3. The engine component of claim 1 or claim 2, wherein the coating comprises one of yttria-stabilized zirconia oxide, a nickel aluminide alloy, a platinum aluminide alloy, a NiCrAlY alloy, a CoCrAlY alloy, a NiCoCrAlY alloy, or a CoNiCrAlY alloy.

4. The engine component of any preceding claim, wherein the substrate comprises one of steel, titanium, a nickel-based superalloy, a cobalt-based superalloy, or an iron-based superalloy.

5. The engine component of any preceding claim, wherein the multiple facets comprise multiple planar facets, wherein the relative angle defined by at least two of the multiple planar facets is 40 degrees or less.

6. The engine component of any preceding claim, wherein the passage further defines a metering section upstream of the multifaceted diffusing section and defining a metering diameter of the passage, and wherein at least some of the multiple facets have a facet length that is greater than or equal to ¼ the metering diameter and less than twice the metering diameter.

7. The engine component of claim 6, wherein each of the multiple facets have a facet depth that is less than or equal to the metering diameter.

8. The engine component of any one of claims 1 to 4, wherein the multiple facets comprise multiple planar facets, multiple arcuate facets, or a combination of planar and arcuate facets.

9. The engine component of any preceding claim, wherein the multiple facets are randomly oriented with respect to each other.

10. The engine component of any preceding claim, wherein the multiple facets define a surface topology of the multifaceted diffusing section, and the coating substantially follows the surface topology.

11. The engine component of any preceding claim, wherein the coating includes a substantially constant thickness over the multifaceted diffusing section.

12. A method of producing an engine component for a gas turbine engine, comprising:

> machining a passage for a film hole through a substrate having a first surface and a second surface, the passage having an inlet provided on the first surface and an outlet provided on the second surface;
> machining multiple facets in the passage to define a multifaceted diffusing section of the film hole having an increased adhesion surface area on the second surface as compared to the second surface prior to machining the multiple facets; and
> after multiple facets are machined, adhering a coating to the multifaceted diffusing section of the film hole.

13. The method of claim 12, wherein machining the passage comprises electric discharge machining, laser drilling, abrasive liquid jet drilling, or water guided laser jet drilling, and wherein machining the multiple facets comprises electric discharge machining, laser drilling, abrasive liquid jet drilling, or water guided laser jet drilling.

14. The method of claim 12 or claim 13, wherein adhering the coating comprises thermal spraying, physical vapor deposition, chemical vapor deposition, slurry coating, sputtering, electron beam physical vapor deposition, electroless plating, or electroplating.

15. A method of repairing an engine component comprising a coated substrate with a film hole in the substrate having a diffusing section, the method comprising:

> stripping the old coating from the diffusing section;
> cleaning the stripped diffusing section;
> adhering a new coating to the diffusing section; and
> after cleaning and prior to adhering the new coating, machining multiple facets into the diffusing section;
> wherein the facets are configured to improve the adhesion of the new coating to the substrate.

FIG. 1

FIG. 2

**FIG. 3**

**FIG. 4**

**FIG. 5**

**FIG. 6**

**FIG. 7**

EP 3 040 514 A1

FIG. 8

EP 3 040 514 A1

**200**

**202**

Machine passage for
film hole in substrate

**204**

Machine multiple facets
in the passage

**206**

Adhere coating to multifaceted
diffusing section

**208**

Degrease the substrate

**210**

Grist blast the substrate

**212**

Clean

**214**

Apply coating preparation layer

**216**

Heat treat the substrate

**218**

Age the substrate

# FIG. 9

400

```
┌─────────────────────────┐
│   Strip the old coating  │ ← 402
└─────────────────────────┘
            │
            ▼
┌─────────────────────────┐
│          Clean          │ ← 404
└─────────────────────────┘
            │
            ▼
┌─────────────────────────┐
│    Machine facets into   │ ← 406
│   the diffusing section  │
└─────────────────────────┘
            │
            ▼
┌─────────────────────────┐
│    Adhere new coating    │ ← 408
└─────────────────────────┘
```

# FIG. 10

Europäisches
Patentamt

European
Patent Office

Office européen
des brevets

# EUROPEAN SEARCH REPORT

Application Number

EP 15 19 9789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 2 937 513 A2 (UNITED TECHNOLOGIES CORP [US]) 28 October 2015 (2015-10-28) * figures * ----- | 1,12 | INV. F01D5/18 F23R3/00 F01D5/28 |
| X | US 2014/161585 A1 (ARNESS BRIAN PETER [US] ET AL) 12 June 2014 (2014-06-12) * figures * ----- | 1-15 | |
| X | EP 0 985 802 A1 (ABB RESEARCH LTD [CH]) 15 March 2000 (2000-03-15) * figures 3,4 * ----- | 1-15 | |
| X | US 5 941 686 A (GUPTA BHUPENDRA K [US] ET AL) 24 August 1999 (1999-08-24) * figure 4 * ----- | 1-15 | |
| A | DE 10 2009 003861 A1 (GEN ELECTRIC [US]) 5 November 2009 (2009-11-05) * the whole document * ----- | 1-15 | |

**TECHNICAL FIELDS SEARCHED (IPC)**

F01D
F23R

The present search report has been drawn up for all claims

| Place of search | Date of completion of the search | Examiner |
|---|---|---|
| Munich | 29 April 2016 | Raspo, Fabrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 3 040 514 A1

## ANNEX TO THE EUROPEAN SEARCH REPORT
## ON EUROPEAN PATENT APPLICATION NO.

EP 15 19 9789

29-04-2016

| Patent document cited in search report | | | Publication date | Patent family member(s) | | Publication date |
|---|---|---|---|---|---|---|
| EP | 2937513 | A2 | 28-10-2015 | NONE | | |
| US | 2014161585 | A1 | 12-06-2014 | NONE | | |
| EP | 0985802 | A1 | 15-03-2000 | CA | 2282010 A1 | 10-03-2000 |
| | | | | DE | 59810031 D1 | 04-12-2003 |
| | | | | EP | 0985802 A1 | 15-03-2000 |
| | | | | JP | 4250270 B2 | 08-04-2009 |
| | | | | JP | 2000087701 A | 28-03-2000 |
| US | 5941686 | A | 24-08-1999 | DE | 69734625 D1 | 22-12-2005 |
| | | | | DE | 69734625 T2 | 27-07-2006 |
| | | | | EP | 0807744 A2 | 19-11-1997 |
| | | | | JP | 4108152 B2 | 25-06-2008 |
| | | | | JP | H1054202 A | 24-02-1998 |
| | | | | SG | 55270 A1 | 21-12-1998 |
| | | | | US | 5771577 A | 30-06-1998 |
| | | | | US | 5941686 A | 24-08-1999 |
| DE | 102009003861 | A1 | 05-11-2009 | CN | 101570073 A | 04-11-2009 |
| | | | | DE | 102009003861 A1 | 05-11-2009 |
| | | | | FR | 2930783 A1 | 06-11-2009 |
| | | | | JP | 2009270199 A | 19-11-2009 |
| | | | | US | 2009324401 A1 | 31-12-2009 |

EPO FORM P0459